# EUROPÄISCHE PATENTSCHRIFT

(11) **EP 2 546 645 B1**
(45) Veröffentlichungstag und Bekanntmachung des Hinweises auf die Patenterteilung: **28.12.2016**
(21) Anmeldenummer: 12005079.4
(22) Anmeldetag: 09.07.2012
(51) Int. Cl.: G01N 30/30, F25D 19/00, F25D 23/02

(54) **Gaschromatograph mit Ofen und Kühlvorrichtung**
Gas chromatograph with furnace and cooling device
Chromatographe en phase gazeuse avec four et dispositif de refroidissement

(30) Priorität: 14.07.2011 DE 102011107715
(43) Veröffentlichungstag der Anmeldung: 16.01.2013
(73) Patentinhaber: SIM Scientific Instruments Manufacturer GmbH, 46149 Oberhausen (DE)
(72) Erfinder: Eichelberg, Rolf, 45475 Mülheim (DE); Kientopf, Werner, 46145 Oberhausen (DE)
(74) Vertreter: Gesthuysen Patent- und Rechtsanwälte

(56) Entgegenhaltungen:
- EP-A1- 1 696 231
- DE-C1- 19 707 114
- US-A- 3 419 255
- US-A- 4 286 456
- US-A1- 2009 056 367

## Beschreibung

Die Erfindung betrifft einen Gaschromatographen mit einem Ofen, einer Ofentür, über die der Ofenraum des Ofens zugänglich ist, einer in dem Ofenraum angeordneten Trennsäule zur Stofftrennung, einer Heizvorrichtung zum Aufheizen des Ofenraums und einer Kühlvorrichtung zum Abkühlen des Ofenraums, wobei die Kühlvorrichtung eine Kältemaschine mit einem Kühlmittelkreislauf mit einer Wärme aufnehmenden Seite und mit einer Wärme abgebenden Seite ist, und wobei der Kühlmittelkreislauf gegenüber dem Ofenraum abgeschlossen ist. Darüber hinaus betrifft die Erfindung auch eine Ofentür für den Ofen eines solchen Gaschromatographen.

Gaschromatographen der vorbezeichneten Art sind seit langem in unterschiedlichen Ausführungen bekannt. Zur Analyse der Bestandteile eines Stoffes bzw. Stoffgemisches wird eine Stoffprobe mittels des Injektors in die Trennsäule geleitet und strömt dann mit dem über den Trägergasanschluss eingeleiteten Trägergas durch die Trennsäule, wobei unterschiedliche Bestandteile des dann in der Gasphase befindlichen Stoffgemisches unterschiedlich stark mit den hier nicht näher erläuterten Bestandteilen der Trennsäule wechselwirken und sich so durch verschiedene Durchgangszeiten durch die Trennsäule auszeichnen und über diese charakteristischen Retentionszeiten mittels des am Ausgang der Trennsäule angeschlossenen Detektors bestimmbar sind.

US 4,286456 offenbart einen Gaschromatographen mit einer Trennsäule, die innerhalb eines Ofens angeordnet ist. Der Ofen ist von einem Gehäuse umgeben, dass an der Innenseite eine Isolierung aufweist. Innerhalb der Isolierung ist ein erstes Volumen ausgebildet. Der Ofenraum ist über eine Widerstandsheizung aufheizbar, wobei die erhitzte Luft über einen in dem Ofenraum angeordneten Ventilator verteilt wird. Der abzüglich des Ofenraums verbleibende Raum des ersten Volumens ist mit einer Kühlvorrichtung verbunden, mit der erwärmte Luft aus dem ersten Volumen abführbar und gekühlte Luft zuführbar ist.

DE 197 07 114 C1 offenbart ein Verfahren zur Trennung ausgewählter Stoffe in einem Gaschromatographen und einen Gaschromatographen zur Durchführung dieses Verfahrens. Der Gaschromatograph umfasst einen Ofenraum, der aus einem Boden und einer zylindrischen Wand gebildet wird. In dem Ofenraum ist eine Trennsäule angeordnet, die einlaufseitig und auslaufseitig durch die zylindrische Wand des Ofens hindurchgeführt ist. Oberseitig ist der durch die zylindrische Wand begrenzte Ofenraum durch einen zylindrischen Schließdeckel abgeschlossen. Der Schließdeckel umfasst eine Heizlampe, die im mittigen Bereich des Schließdeckels angeordnet ist und starr mit diesem verbunden ist.

EP 1 696 231 A1 offenbart einen Gaschromatographen, dessen Trennsäulen jeweils innerhalb eines Ofenraums angeordnet sind. Die Ofenräume sind über Heizeinrichtungen aufheizbar. Ferner sind die Ofenräume mit einer Kühleinrichtung verbunden, mit der die Ofenräume abkühlbar sind.

US 3,419,255 A offenbart eine Ofenanordnung, die üblicherweise in wissenschaftlichen Laboren verwendet wird. Innerhalb eines Ofenraums ist eine Trennsäule angeordnet, die mittels des Ofens aufgeheizt werden kann. Der Ofen ist zweiteilig konstruiert, wobei der vordere Teil des Ofens - eine Ofentür - über ein Schienensystem von dem anderen Teil des Ofens separierbar ist.

Die Trennsäule besteht häufig aus einem mehrere Meter langen aufgerollten, dünnen Rohr, das in dem Ofen in unmittelbarer Nähe eines Gebläses vorgesehen ist, wobei dieses Gebläse die Aufgabe hat, für eine gleichmäßige Temperaturverteilung in dem Ofenraum zu sorgen und über die Heizvorrichtung temperierte Luft möglichst schnell in den Ofenraum zu transportieren. Der Temperierbarkeit des Ofenraums kommt eine große Bedeutung zu, da die Ofentemperatur und damit auch die Temperatur innerhalb der Trennsäule unmittelbar bestimmend ist für die Flüchtigkeit der zu untersuchenden Substanzen. Folglich lässt sich durch Einstellung der Temperatur innerhalb des Ofenraums die Stofftrennung und auch die Analysezeit maßgeblich beeinflussen.

Bei der Gaschromatographie werden zumeist bestimmte Temperaturprofile - von niedrigen zu höheren Temperaturen - gefahren, um die Trennung der verschiedenen Stoffbestandteile voneinander zu beschleunigen und die Retentionszeit von erst bei höheren Temperaturen siedenden Stoffbestandteilen zu verkürzen. Das Temperaturprofil muss exakt reproduzierbar sein, um ein zuverlässiges Analyseergebnis zu erhalten.

In dem Ofen des Gaschromatographen müssen sehr unterschiedliche Temperaturen eingestellt und vergleichsweise große Temperaturbereiche auch innerhalb vergleichsweise kleiner Zeiträume überstrichen werden können. Ofentemperaturen liegen häufig im Bereich zwischen Zimmertemperatur und bis zu etwa 450 °C, Temperaturprofile weisen häufig Heizraten auf, die von Bruchteilen eines Grades bis zu mehreren 10 °C/min liegen.

Nahezu alle Gaschromatographen sind mit einer Ofentür versehen, über die der Ofenraum und damit die Trennsäule zugänglich sind. Meist ist die gewickelte Trennsäule mit ihrer Breitseite in der Nähe einer der Ofentür gegenüber liegenden Innenseite des Ofens angeordnet, so dass der Verwender nach Öffnen der Ofentür direkt auf die Trennsäule blickt. In der der Ofentür gegenüberliegenden Innenwand des Ofens ist meist auch eine Öffnung für den Luftstrom eines dahinter liegenden Ventilators vorgesehen, der die Luft im Ofenraum verwirbelt.

Es ist ohne weiteres verständlich, dass der Wunsch besteht, den Analysebetrieb möglichst effektiv und zeitsparend zu gestalten, wobei ein Problem darin besteht, den Ofen bzw. Ofenraum nach Durchfahren eines Temperaturprofils, das üblicherweise bei der höchsten Temperatur endet, wieder auf die erheblich niedrigere Anfangstemperatur zurückzufahren. Um diesen Prozess zu beschleunigen, ist bei einigen Gaschromatographen eine Kühlvorrichtung vorgesehen, um den Ofenraum aktiv abkühlen zu können, damit möglichst zeitnah mit einem neuen Analysezyklus begonnen werden kann.

Der Anmelderin sind aus der Praxis solche Kühlvorrichtungen bekannt, bei denen eine Abkühlung des Ofenraums unter Zuleitung eines flüssigen Kühlmediums (Stickstoff, Kohlendioxid) in den Ofenraum erfolgt, der Ofenraum selbst also als Verdampfer für das Kühlmedium dient. Derartige Lösungen sind in mehrerlei Hinsicht problematisch. Je nach verwendetem Kühlmedium müssen bei derartigen Kühlvorrichtungen auch sicherheitstechnische Maßnahmen getroffen werden, was möglicherweise auch neue Anforderungen an den Aufstellungsort eines solchen Gaschromatographen mit sich bringt. Da solche Kühlmedien nicht in einem geschlossenen Kreislauf zurückgewonnen werden, sind mit der Abkühlung des Ofenraums auch erhebliche Kosten verbunden, da Kühlmittel verbraucht wird. Problematisch können weiterhin auch die erheblichen und sich schlagartig einstellenden Temperaturunterschiede und eine damit verbundene Materialbeanspruchung sein, insbesondere wenn flüssiger Stickstoff oder flüssiges Kohlendioxid verwendet wird.

Aufgabe der vorliegenden Erfindung ist es, einen solchen Gaschromatographen anzugeben, bei dem eine Kühlvorrichtung zum Einsatz kommt, mit der die vorgenannten Probleme zumindest weitgehend vermieden werden können.

Die zuvor hergeleitete Aufgabe ist bei dem eingangs beschriebenen Gaschromatographen zunächst und im Wesentlichen dadurch gelöst, dass der Gaschromatograph einen Trägergasanschluss, einen Injektor zur Probenbeschickung der Trennsäule und einen Anschluss für einen Detektor am Ausgang der Trennsäule umfasst, dass die Wärme aufnehmende Seite der Kältemaschine an der Innenseite der Ofentür angeordnet ist, und dass ein einströmseitiger Anschluss und ein ausströmseitiger Anschluss eines Wärme aufnehmenden Wärmeübertragers durch die Ofentür geführt sind, so dass der Wärme aufnehmende Wärmeübertrager von außerhalb des Ofens und von außerhalb des Gaschromatographen zugänglich ist und der Kühlmittelkreislauf der Kältemaschine von außerhalb des Gaschromatographen schließbar ist.

Durch diese Maßnahme kommt das Kühlmittel des Kühlmittelkreislaufes nicht mehr in Kontakt mit dem Ofenraum selbst. Darüber hinaus kann ein solcher Gaschromatograph bedenkenlos geöffnet werden, da keine Kühlmittelrückstände im Ofenraum zu erwarten sind. Abgesehen davon geht aufgrund des geschlossenen Kühlmittelkreislaufes kein Kühlmittel verloren, so dass zur Erzielung der Kühlung praktisch kein Verbrauchsmittel anfällt.

Ferner ist die Wärme aufnehmende Seite der Kältemaschine an der Innenseite der Ofentür angeordnet. Diese Variante hat den Vorteil, dass bei Öffnen der Ofentür die Wärme aufnehmende Seite der Kältemaschine - also beispielsweise der Verdampfer - mit aus dem Ofenraum herausgeschwenkt wird, der Ofenraum also ohne Hindernisse zugänglich ist. Darüber hinaus besteht hier der Vorteil, dass die Ofentür meist ohne weiteres von dem Gaschromatographen separierbar ist, so dass eine nachträgliche Ausrüstung eines Gaschromatographen mit der erfindungsgemäßen Kühlvorrichtung möglich ist. Bevorzugt wird ein einströmseitiger Anschluss und ein ausströmseitiger Anschluss des Wärme aufnehmenden Wärmeübertragers durch die Ofentür geführt, so dass der Wärme aufnehmende Wärmeübertrager von außerhalb des Ofens und von außerhalb des Gaschromatographen zugänglich ist und der Kühlmittelkreislauf der Kältemaschine von außerhalb des Gaschromatographen schließbar ist.

Gemäß einer bevorzugten Ausgestaltung der Erfindung ist vorgesehen, dass die Kühlvorrichtung eine Kompressionskältemaschine ist, mit einem Kompressionselement, einem Expansionselement, einem Wärmeübertrager auf der Wärme abgebenden Seite, einem Wärmeübertrager auf der Wärme aufnehmenden Seite, wobei der Wärme aufnehmende Wärmeübertrager im Ofenraum des Gaschromatographen angeordnet ist. Kompressionskältemaschinen haben einen guten Wirkungsgrad und sind als Standard-Kühlvorrichtungen weit verbreitet, sie sind daher ohne weiteres verfügbar, zuverlässig und in der Anschaffung vergleichsweise preiswert. Der auf der Wärme abgebenden Seite vorhandene Wärmeübertrager wirkt als Verflüssiger für das Kühlmittel und der auf der Wärme aufnehmenden Seite in dem Gaschromatographen vorgesehene Wärmeübertrager als Verdampfer für das Kühlmittel.

Bevorzugt ist vorgesehen, dass ausschließlich die Wärme aufnehmende Seite der Kühlvorrichtung in dem Ofenraum und damit im Gaschromatographen angeordnet ist, alle anderen Elemente des Kühlmittelkreislaufes außerhalb des Gaschromatographen liegen, insbesondere also der Wärmeübertrager der Wärme aufnehmenden Seite der Kompressionskältemaschine im Ofenraum angeordnet ist, alle anderen Elemente der Kompressionskältemaschine außerhalb des Gaschromatographen angeordnet sind. Durch diese Ausgestaltung ist es möglich, vorhandene Gaschromatographen nachträglich in erfindungsgemäßer Weise mit einer Kühlvorrichtung auszustatten, da lediglich der Wärme aufnehmende Wärmeübertrager in dem Ofen untergebracht werden muss, was bei handelsüblichen Gaschromatographen ohne weiteres möglich ist. Die anderen Bestandteile, wie z. B. das Kompressionselement - Kompressor - können ohne weiteres außerhalb des vorhandenen Gaschromatographen angeordnet werden.

Gemäß einer weiteren vorteilhaften Ausgestaltung der Erfindung ist vorgesehen, dass der Wärme aufnehmende Wärmeübertrager an einer Wand des Ofenraumes angeordnet ist, die unmittelbar benachbart zu einer Außenwand des Gaschromatographen ist. Dies bringt den Vorteil mit sich, dass etwaige Zugänge zu dem Wärme aufnehmenden Wärmeübertrager durch die Außenwand des Gaschromatographen gelegt werden kann, wodurch kurze Wege für den Kühlmittelkreislauf gewährleistet werden und der konstruktive Aufwand - insbesondere auch zur nachträglichen Installation - gering gehalten wird.

Die eingangs hergeleitete Aufgabe ist gemäß eines weiteren Aspekts der Erfindung bei einer Ofentür für einen Gaschromatographen dadurch gelöst, dass an der Innenseite der Ofentür ein geschlossener Wärmeübertrager zur Realisierung einer Kühlvorrichtung aufgesetzt ist, und wenigstens ein einströmseitiger Anschluss und wenigstens ein ausströmseitiger Anschluss des Wärmeübertragers durch die Ofentür geführt sind, so dass der Wärmeübertrager von der Außenseite der Ofentür über den einströmseitigen Anschluss und den ausströmseitigen Anschluss zugänglich ist, und der Wärmeübertrager an den Kühlmittelkreislauf einer Kältemaschine von der Außenseite der Ofentür her anschließbar ist. Durch Bereitstellung einer derartigen Ofentür ist es möglich, bestehende Gaschromatographen, die mit keiner Kühlvorrichtung ausgestattet sind, problemlos mit einer Kühlvorrichtung auszustatten. Es können sogleich für bestehende Gaschromatographen passende Ofentüren mit den erforderlichen technischen Komponenten ausgestattet werden und bestehende Ofentüren durch die zuvor beschriebene Ofentür ausgetauscht werden, so dass nicht einmal eine nennenswerte Umrüstzeit zur Ausstattung eines bestehenden Gaschromatographen mit der erfindungsgemäßen Kühlvorrichtung notwendig ist.

Im Einzelnen gibt es nun eine Vielzahl von Möglichkeiten, den erfindungsgemäßen Gaschromatographen und die erfindungsgemäße Ofentür für einen Gaschromatographen auszugestalten und weiterzubilden. Dazu wird auf die dem Patentanspruch 1 nachgeordneten Patentansprüche sowie auf die nachfolgende detaillierte Beschreibung bevorzugter Ausführungsbeispiele der Erfindung unter Bezugnahme auf die Zeichnung verwiesen. In der Zeichnung zeigen
- Fig. 1: eine perspektivische schematische Darstellung eines erfindungsgemäßen Gaschromatographen,
- Fig. 2: ein schematisches Schaltbild eines erfindungsgemäßen Gaschromatographen,
- Fig. 3: eine perspektivische Darstellung einer erfindungsgemäßen Ofentür mit dem Teil einer Kühlvorrichtung für einen Gaschromatographen,
- Fig. 4: eine Draufsicht auf die Innenseite der Ofentür gemäß Fig. 3,
- Fig. 5: eine Seitenansicht auf die Ofentür gemäß Fig. 3 und
- Fig. 6: eine weitere Seitenansicht der Ofentür gemäß Fig. 3.

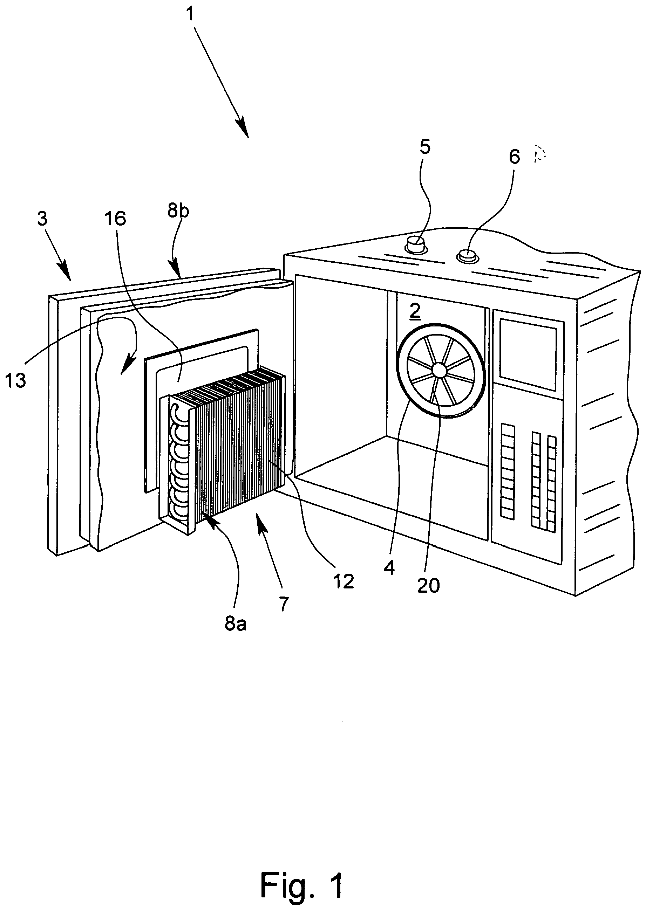

In Fig. 1 ist schematisch dargestellt in perspektivischer Ansicht ein Gaschromatograph 1 mit einem Ofen 2 und einer geöffneten Ofentür 3, die den Blick auf den Ofenraum des Ofens 2 freigibt und über die der Ofenraum des Ofens 2 zugänglich ist. In dem Ofenraum ist eine Trennsäule 4 zur Stofftrennung angeordnet, die vorliegend zu einer mehrere Windungen umfassenden Spule aufgewickelt ist.

Angedeutet sind in Fig. 1 ferner ein Injektor 5 und ein Detektoranschluss 6, wobei der Injektor 5 die Aufgabe hat, die Trennsäule 4 mit einer Probe zu beschicken, wobei der Injektor 5 beheizbar ist und die gasförmigen Probenbestandteile zusammen mit dem über einen hier nicht dargestellten Trägergasanschluss zugeführten Trägergas durch die Trennsäule 4 geführt werden. An den in Fig. 1 dargestellten Detektoranschluss 6 am Ausgang der Trennsäule 4 kann ein Detektor zur Erkennung der getrennten Probenbestandteile angeschlossen werden. Bei anderen aus der Praxis bekannten Geräten ist der Anschluss intern und führt zu einem in Baueinheit mit dem Gaschromatographen realisierten Detektor; auf diese Unterschiede und konkreten Realisierungen kommt es im Folgenden jedoch nicht an.

Ferner dargestellt ist ein Gebläse 20, mit der die von einer nicht im Einzelnen dargestellten Heizvorrichtung temperierte Luft in den Ofenraum eingeblasen und dort verwirbelt wird.

Darüber hinaus ist - jedenfalls zum Teil - erkennbar eine Kühlvorrichtung 7, die der Abkühlung des Ofenraums dient, und die vorliegend als eine Kältemaschine mit einem Kühlmittelkreislauf ausgestaltet ist, deren Wärme aufnehmende Seite 8a in Fig. 1 zu erkennen ist, wobei von besonderer Wichtigkeit ist, dass die Wärme aufnehmende Seite 8a und damit der Kühlmittelkreislauf insgesamt gegenüber dem Ofenraum abgeschlossen ist, das in dem Kühlmittelkreislauf transportierte Kühlmittel also nicht in den Ofenraum selbst dringen kann.

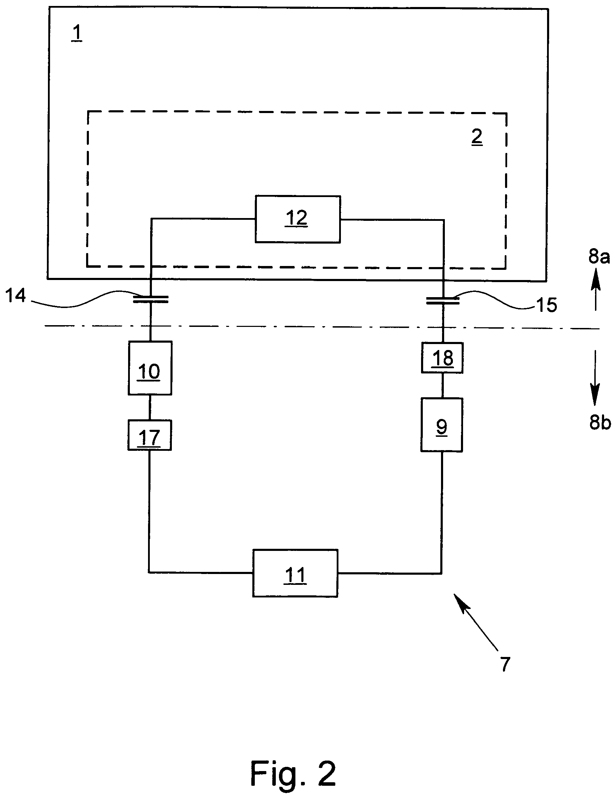

In Fig. 2 ist anhand eines schematischen Schaltbildes der Zusammenhang noch einmal erläutert. Dargestellt ist der Gaschromatograph 1 mit dem einen Ofenraum aufweisenden Ofen 2. Die Kühlvorrichtung 7 ist eine Kältemaschine mit einem Kühlmittelkreislauf mit einer Wärme aufnehmenden Seite 8a und einer Wärme abgebenden Seite 8b. Der Kühlmittelkreislauf ist gegenüber dem Ofenraum abgeschlossen, Kühlmittel des Kühlmittelkreislaufes kann nicht in den Ofenraum dringen.

Bei den in den Fig. 1 und 2 dargestellten Ausführungsbeispielen ist die Kühlvorrichtung 7 als Kompressionskältemaschine ausgestaltet, mit einem Kompressionselement 9 und einem Expansionselement 10, einem Wärmeübertrager 11 auf der Wärme abgebenden Seite 8b - der also als Verflüssiger arbeitet -, einem Wärmeübertrager 12 auf der Wärme aufnehmenden Seite 8a - der also als Verdampfer arbeitet -, wobei der Wärme aufnehmende Wärmeübertrager 12 im Ofenraum des Ofens 2 des Gaschromatographen 1 angeordnet ist.

Den Ausführungsbeispielen gemäß den Fig. 1 und 2 ist gemein, dass ausschließlich die Wärme aufnehmende Seite 8a der Kühlvorrichtung 7 in dem Ofenraum und damit im Gaschromatographen 1 angeordnet ist, alle anderen Elemente des Kühlmittelkreislaufes - in Fig. 1 nicht bildlich dargestellt - sind außerhalb des Gaschromatographen 1 gelegen, insbesondere ist also der Wärmeübertrager 12 der Wärme aufnehmenden Seite 8a der Kompressionskältemaschine im Ofenraum angeordnet, und alle anderen Elemente 9, 10, 11 der Kompressionskältemaschine sind außerhalb des Gaschromatographen 1 angeordnet.

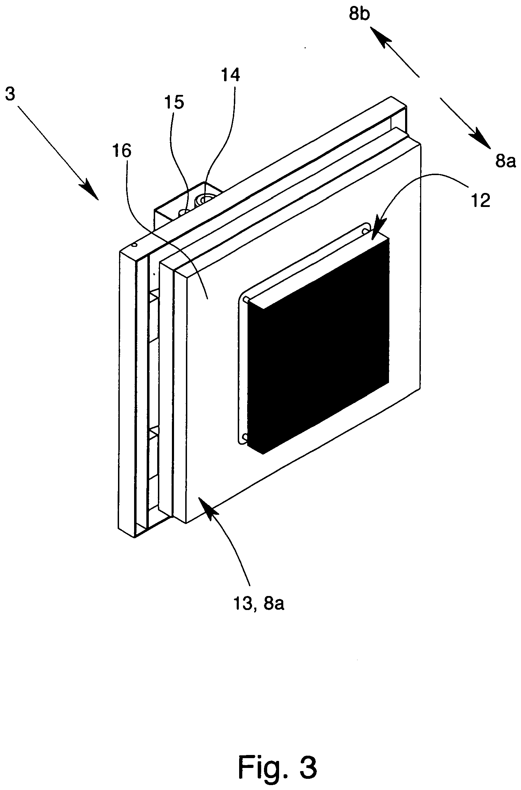

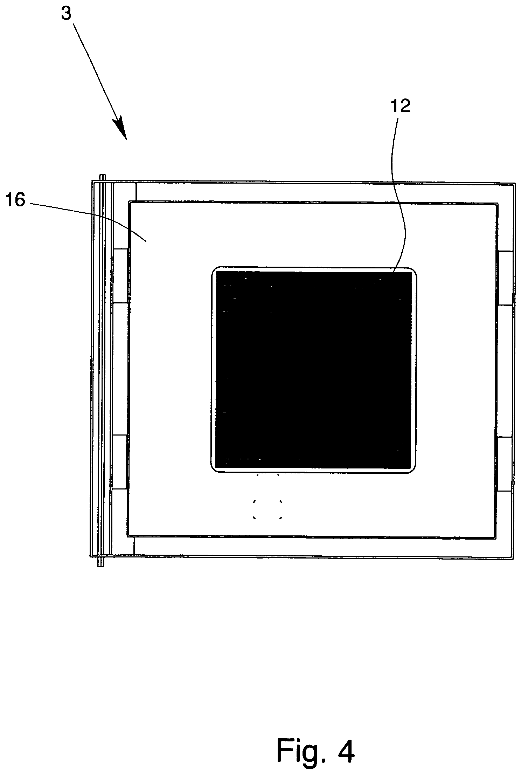

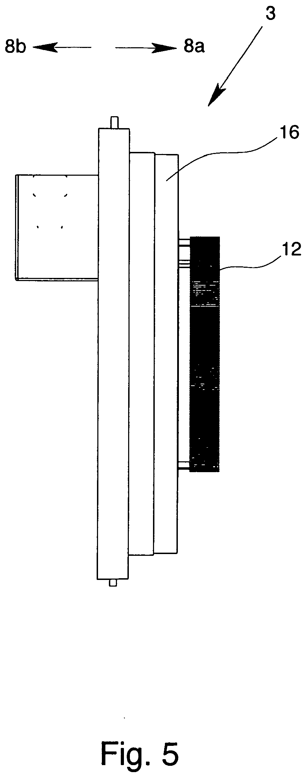

Vorteilhaft ist es, wie in Fig. 1, aber auch in den Fig. 3 bis 6 zu erkennen, wenn der Wärme aufnehmende Wärmeübertrager 12 an einer Wand 13 des Ofenraums angeordnet ist, die unmittelbar benachbart zu einer Außenwand des Gaschromatographen ist, weil durch diese Maßnahme der Ofenraum des Ofens 2 weiterhin gut zugänglich ist.

Der vorgenannte Vorteil ist vor allem dann gegeben, wenn - wie in den Fig. 1 und 3 bis 6 dargestellt - die Wärme aufnehmende Seite 8a der Kältemaschine 7 an der Innenseite der Ofentür 3 angeordnet ist, weil dann der in dem Ofen 2 befindliche Teil der Kältemaschine 7 bei Öffnen der Ofentür 3 aus dem Ofenraum herausgeschwenkt wird, so dass überhaupt keine Beeinträchtigung der Zugänglichkeit des Ofenraums gegeben ist.

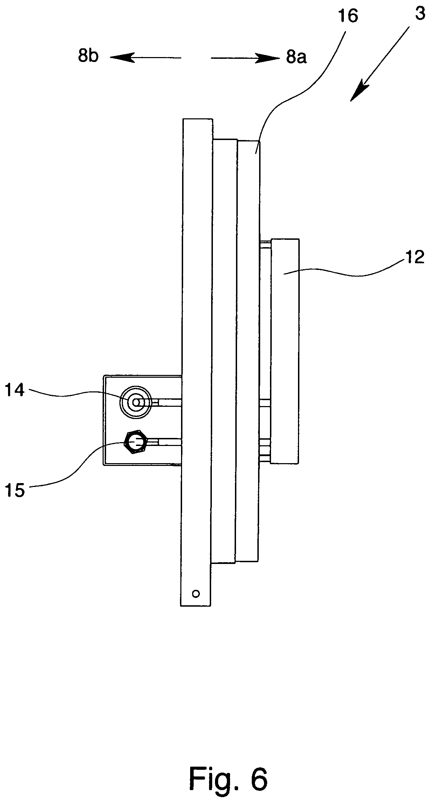

In den Fig. 3 bis 6 ist die Ofentür 3 aus mehreren Ansichten dargestellt. Durch die Ofentür 3 ist jeweils ein einströmseitiger Anschluss 14 und ein ausströmseitiger Anschluss 15 des Wärme aufnehmenden Wärmeübertragers 12 geführt, so dass der Wärme aufnehmende Wärmeübertrager 12 von außerhalb des Ofens 2 und damit auch von außerhalb des Gaschromatographen 1 zugänglich ist und der Kühlmittelkreislauf der Kältemaschine 7 von außerhalb des Gaschromatographen schließbar ist. Der Wärme aufnehmende Wärmeübertrager 12 ist beabstandet von einer Isolierschicht 16 der Ofentür 3 angeordnet, damit die Luft für einen besseren Wärmeaustausch zirkulieren kann. In den Fig. 3 und 6 ist zu erkennen, dass der einströmseitige Anschluss 14 und der ausströmseitige Anschluss 15 durch nicht lösbare Schraubanschlüsse realisiert sind, es sind auch andere lösbare Anschlüsse und nicht lösbare Anschlüsse denkbar.

Bei dem in Fig. 2 dargestellten Gaschromatographen 1 ist am einströmseitigen Anschluss 14 des Wärme aufnehmenden Wärmeübertragers 12 ein erstes Ventil 17 ausgeführt, das vorliegend als Magnetventil ausgestaltet ist, über das der Kühlmittelkreislauf geschlossen und geöffnet werden kann. Über dieses Ventil kann der Kühlmittelstrom in das Expansionselement 10, in den Wärme aufnehmenden Wärmeübertrager 12 und damit in den Ofenraum gesteuert werden. Ferner ist am ausströmseitigen Anschluss 15 des Wärme aufnehmenden Wärmeübertragers 12 ein zweites Ventil 18 vorgesehen, das wiederum als Magnetventil ausgeführt ist, so dass der den Wärme aufnehmenden Wärmeübertrager 12 aufweisende Teil des Kühlmittelkreislaufes durch Schließen des ersten Ventils 17 und des zweiten Ventils 18 von dem restlichen Teil des Kühlmittelkreislaufes abgetrennt werden kann, insbesondere kann zunächst das erste Ventil 17 geschlossen werden, wobei das nachlaufende Kompressionselement 9 Kühlmittel aus der dann gesperrten Leitung weiter abtransportiert, bis der Differenzdruck am Kompressionselement 9 zu groß wird. Nachfolgend wird dann das zweite Ventil 18 geschlossen, was den Effekt hat, dass die Wärme aufnehmende Seite 8a des Kühlmittelkreislaufes jedenfalls zu einem gewissen Grad von dem Kühlmittel ausgeräumt ist, so dass das Kühlmittel während des Heizvorgangs zum einen keine Wärmemenge aufnimmt, die später wieder abgegeben werden muss, zum anderen auch durch die auftretenden Temperaturen keinen Schaden nimmt.

In einer anderen hier nicht dargestellten Ausgestaltung ist das in Fig. 2 dargestellte zweite Ventil 18 nicht vorgesehen, das Kompressionselement läuft dann zunächst auch bei geschlossenem ersten Ventil durch, um die Wärme aufnehmende Seite des Kühlmittelkreislaufes jedenfalls zu einem gewissen Grad von dem Kühlmittel auszuräumen. Ist der gewünschte Unterdruck erreicht, wird das Kompressionselement dann ausgeschaltet, wobei die Sperrwirkung des Kompressionselementes einen Druckausgleich verhindert. Bei einer weiteren hier nicht dargestellten Ausgestaltung ist das einzig vorhandene erste Ventil als Proportionalventil ausgestaltet, so dass durch geeignete Ansteuerung des Proportionalventils - und ggf. des steuerbar vorgesehenen Kompressionselementes - die gewünschte Kühlleistung eingestellt werden kann.

Die vorgeschlagene Kühlung für einen Gaschromatographen 1 wird modular dadurch realisiert, dass - wie in den Figuren 3 bis 6 dargestellt - an der Innenseite der Ofentür 3 ein geschlossener Wärmeübertrager 12 aufgesetzt ist und ein einströmseitiger Anschluss 14 und ein ausströmseitiger Anschluss 15 des Wärmeübertragers 12 durch die Ofentür 3 geführt ist, so dass der Wärmeübertrager 12 von der Außenseite der Ofentür 3 über den einströmseitigen Anschluss 14 und den ausströmseitigen Anschluss 15 zugänglich ist, und der Wärmeübertrager 12 an den Kühlmittelkreislauf einer Kältemaschine 7 von der Außenseite der Ofentür her anschließbar ist. Es ist leicht vorstellbar, dass ein Gaschromatograph mit einer solchen Ofentür 3 ohne weiteres mit einer Kühlvorrichtung nachgerüstet werden kann, was die Produktivität des Gaschromatographen aus den eingangs erwähnten Gründen stark erhöht.

## Patentansprüche

1. Gaschromatograph (1) mit einem Ofen (2), einer Ofentür (3), über die der Ofenraum des Ofens (2) zugänglich ist, einer in dem Ofenraum angeordneten Trennsäule (4) zur Stofftrennung, einer Heizvorrichtung zum Aufheizen des Ofenraums und einer Kühlvorrichtung (7) zum Abkühlen des Ofenraums, wobei die Kühlvorrichtung (7) eine Kältemaschine mit einem Kühlmittelkreislauf mit einer Wärme aufnehmenden Seite (8a) und mit einer Wärme abgebenden Seite (8b) ist, und wobei der Kühlmittelkreislauf gegenüber dem Ofenraum abgeschlossen ist,
**dadurch gekennzeichnet,**
**dass** der Gaschromatograph einen Trägergasanschluss, einen Injektor (5) zur Probenbeschickung der Trennsäule (4) und einen Anschluss (6) für einen Detektor am Ausgang der Trennsäule (4) umfasst, dass die Wärme aufnehmende Seite (8a) der Kältemaschine (7) an der Innenseite der Ofentür (3) angeordnet ist, und dass ein einströmseitiger Anschluss (14) und ein ausströmseitiger Anschluss (15) eines Wärme aufnehmenden Wärmeübertragers (12) durch die Ofentür geführt sind, so dass der Wärme aufnehmende Wärmeübertrager (12) von außerhalb des Ofens (2) und von außerhalb des Gaschromatographen (1) zugänglich ist und der Kühlmittelkreislauf (7) der Kältemaschine von außerhalb des Gaschromatographen schließbar ist.

2. Gaschromatograph (1) nach Anspruch 1, **dadurch gekennzeichnet, dass** die Kühlvorrichtung (7) eine Kompressionskältemaschine ist, mit einem Kompressionselement (9), einem Expansionselement (10), einem Wärmeübertrager (11) auf der Wärme abgebenden Seite (8b), dem Wärmeübertrager (12) auf der Wärme aufnehmenden Seite (8a), wobei der Wärme aufnehmende Wärmeübertrager (12) im Ofenraum des Gaschromatographen (1) angeordnet ist.

3. Gaschromatograph nach Anspruch 1 oder 2, **dadurch gekennzeichnet, dass** ausschließlich die Wärme aufnehmende Seite (8a) der Kühlvorrichtung (7) in dem Ofenraum und damit im Gaschromatographen (1) angeordnet ist, alle anderen Elemente des Kühlmittelkreislaufes außerhalb des Gaschromatographen liegen, insbesondere also der Wärmeübertrager (12) der Wärme aufnehmenden (8a) Seite der Kompressionskältemaschine im Ofenraum angeordnet ist, alle anderen Elemente der Kompressionskältemaschine außerhalb des Gaschromatographen (1) angeordnet sind.

4. Gaschromatograph (1) nach einem der Ansprüche 1 bis 3, **dadurch gekennzeichnet, dass** am einströmseitigen Anschluss ein erstes Ventil (17), insbesondere ein Magnetventil, vorgesehen ist, über das der Kühlmittelkreislauf freigebbar und unterbrechbar ist.

5. Gaschromatograph nach Anspruch 4, **dadurch gekennzeichnet, dass** am ausströmseitigen Anschluss ein zweites Ventil (18), insbesondere ein Magnetventil, vorgesehen ist, so dass der den Wärme aufnehmenden Wärmeübertrager (12) aufweisende Teil des Kühlmittelkreislaufes durch Schließen des ersten Ventils (17) und des zweiten Ventils (18) von dem restlichen Teil des Kühlmittelkreislaufes abtrennbar ist.

6. Ofentür (3) für einen Ofen (2) eines Gaschromatographen (1), wobei der Ofenraum des Ofens (2) über die Ofentür (3) zugänglich ist,
**dadurch gekennzeichnet,**
**dass** an der Innenseite der Ofentür (3) ein geschlossener Wärmeübertrager (12) zur Realisierung einer Kühlvorrichtung (7) aufgesetzt ist und wenigstens ein einströmseitiger Anschluss (14) und wenigstens ein ausströmseitiger Anschluss (15) des Wärmeübertragers (12) durch die Ofentür (3) geführt sind, so dass der Wärmeübertrager (12) von der Außenseite der Ofentür (3) über den einströmseitigen Anschluss (14) und den ausströmseitigen Anschluss (15) zugänglich ist, und der Wärmeübertrager (12) an den Kühlmittelkreislauf einer Kältemaschine (7) von der Außenseite der Ofentür (3) her anschließbar ist.

## Claims

1. Gas chromatograph (1) having an oven (2), an oven door (3), via which the oven chamber of the oven (2) is accessible, a separating column (4) arranged in the oven chamber for separating materials, a heating device for heating the oven chamber and a cooling device (7) for cooling the oven chamber, wherein the cooling device (7) is a cooling unit having a coolant cycle with a side (8a) receiving heat and a side (8b) giving off heat, and wherein the coolant cycle is closed in relation to the oven chamber
**characterized in,**
**that** the gas chromatograph is comprised of a carrier gas port, an injector (5) for sending the sample into the separating column (4) and a connector (6) for a detector at the outlet of the separating column (4), that the side (8a) of the cooling device (7) receiving heat is arranged on the inside of the oven door (3), and that an inflow side connector (14) and an outflow side connector (15) of a heat exchanger (12) receiving heat are lead through the oven door, so that the heat exchanger (12) receiving heat is accessible from outside of the oven (2) and from outside of the gas chromatograph (1) and the coolant cycle (7) of the cooling unit can be closed from outside of the gas chromatograph.

2. Gas chromagtograph (1) according to claim 1, **characterized in that** the cooling device (7) is a compression cooling unit having a compression element (9), an expansion element (10), a heat exchanger (11) on the side (8b) giving off heat, the heat exchanger (12) on the side (8b) receiving heat, wherein the heat exchanger (12) receiving heat is arranged in the oven chamber of the gas chromatograph (1).

3. Gas chromatograph (1) according to claim 1 or 2, **characterized in that** that only the side (8a) of the cooling device (7) receiving heat is arranged in the oven chamber and thus in the gas chromatograph (1), all other elements of the coolant cycle are located outside of the gas chromatograph (1), i.e. in particular the heat exchanger (12) of the side (8a) receiving heat of the compression cooling unit is arranged in the oven chamber, all other elements of the compression cooling unit are arranged outside of the gas chromatograph (1).

4. Gas chromatograph (1) according to any one of claims 1 to 3, **characterized in that** a first valve (17), in particular a magnet valve, is provided on the inflow side connector, via which the coolant cycle can be enabled and can be interrupted.

5. Gas chromatograph (1) according to claim 4, **characterized in that** a second valve (18), in particular a magnet valve, is provided on the outflow side connector, so that the part of the coolant cycle having the heat exchanger (12) receiving heat can be closed off from the rest of the coolant cycle by closing the first valve (17) and the second valve (18).

6. Oven door (3) for an oven (2) of a gas chromatograph (1), wherein the oven chamber of the oven (2) is accessible via the oven door (3),
**characterized in**
**that** a closed heat exchanger (12) is put on the inside of the oven door (3) for implementing a cooling device (7) and at least one inflow side connector (14) and at least one outflow side connector (15) of the heat exchanger (12) are lead through the oven door (3), so that the heat exchanger (12) is accessible from the outside of the oven door (3) via the inflow side connector (14) and the outflow side connector (15), and the heat exchanger (12) can be connected to the coolant cycle of a cooling unit (7) from the outside of the oven door (3).

## Revendications

1. Chromatographe en phase gazeuse (1) avec un four (2), une porte de four (3) par laquelle la chambre de four du four (2) est accessible, une colonne de séparation (4) disposée dans la chambre de four pour la séparation de substances, un dispositif de chauffage pour le chauffage de la chambre de four et un dispositif de refroidissement (7) pour le refroidissement de la chambre de four, dans lequel le dispositif de refroidissement (7) est une machine frigorifique avec un circuit d'agent réfrigérant avec un côté captant de la chaleur (8a) et avec un côté cédant de la chaleur (8b), et dans lequel le circuit d'agent réfrigérant est fermé par rapport à la chambre de four, **caractérisé en ce que** le chromatographe en phase gazeuse comprend un raccord de gaz porteur, un injecteur (5) pour l'alimentation en échantillons de la colonne de séparation (4) et un raccord (6) pour un détecteur à la sortie de la colonne de séparation (4), **en ce que** le côté captant de la chaleur (8a) de la machine frigorifique (7) est disposé sur le côté intérieur de la porte de four (3), et **en ce qu'**un raccord d'entrée (14) et un raccord de sortie (15) d'un échangeur de chaleur (12) captant de la chaleur sont menés à travers la porte de four, de telle manière que l'échangeur de chaleur captant de la chaleur (12) soit accessible de l'extérieur du four (2) et de l'extérieur du chromatographe en phase gazeuse (1) et que le circuit d'agent réfrigérant (7) de la machine frigorifique puisse être fermé de l'extérieur du chromatographe en phase gazeuse.

2. Chromatographe en phase gazeuse (1) selon la revendication 1, **caractérisé en ce que** le dispositif de refroidissement (7) est une machine frigorifique à compression, avec un élément de compression (9), un élément d'expansion (10), un échangeur de chaleur (11) sur le côté cédant de la chaleur (8b), l'échangeur de chaleur (12) sur le côté cédant de la chaleur (8b), dans lequel l'échangeur de chaleur captant de la chaleur (12) est disposé dans la chambre de four du chromatographe en phase gazeuse (1).

3. Chromatographe en phase gazeuse selon la revendication 1 ou 2, **caractérisé en ce que** seul le côté captant de la chaleur (8a) du dispositif de refroidissement (7) est disposé dans la chambre de four et dès lors dans le chromatographe en phase gazeuse (1), tous les autres éléments du circuit d'agent réfrigérant sont situés à l'extérieur du chromatographe en phase gazeuse, en particulier donc l'échangeur de chaleur (12) du côté captant de la chaleur (8a) de la machine frigorifique à compression est disposé dans la chambre de four, tous les autres éléments de la machine frigorifique à compression sont disposés à l'extérieur du chromatographe en phase gazeuse (1).

4. Chromatographe en phase gazeuse (1) selon l'une quelconque des revendications 1 à 3, **caractérisé en ce qu'**il est prévu au raccord d'entrée une première soupape (17), en particulier une vanne magnétique, par laquelle le circuit d'agent réfrigérant peut être libéré et interrompu.

5. Chromatographe en phase gazeuse selon la revendication 4, **caractérisé en ce qu'**il est prévu au raccord de sortie une deuxième soupape (18), en particulier une vanne magnétique, de telle manière que la partie du circuit d'agent réfrigérant présentant l'échangeur de chaleur captant de la chaleur (12) puisse être séparée de la partie restante du circuit d'agent réfrigérant par fermeture de la première soupape (17) et de la deuxième soupape (18).

6. Porte de four (3) pour un four (2) d'un chromatographe en phase gazeuse (1), dans laquelle la chambre de four du four (2) est accessible par la porte de four (3), **caractérisée en ce qu'**un échangeur de chaleur fermé (12) est monté sur le côté intérieur de la porte de four (3) pour réaliser un dispositif de refroidissement (7) et au moins un raccord d'entrée (14) et au moins un raccord de sortie (15) de l'échangeur de chaleur (12) sont menés à travers la porte de four (3), de telle manière que l'échangeur de chaleur (12) soit accessible depuis le côté extérieur de la porte de four (3) par le raccord d'entrée (14) et le raccord de sortie (15), et que l'échangeur de chaleur (12) puisse être raccordé depuis le côté extérieur de la porte de four (3) au circuit d'agent réfrigérant d'une machine frigorifique (7).
